(19)

**Europäisches Patentamt**

**European Patent Office**

**Office européen des brevets**

(11) **EP 2 905 601 A1**

(12) **EUROPEAN PATENT APPLICATION**

(43) Date of publication:
**12.08.2015 Bulletin 2015/33**

(51) Int Cl.:
***G01N 15/14*** (2006.01)          ***G06K 9/00*** (2006.01)
***G06T 7/00*** (2006.01)

(21) Application number: **15153829.5**

(22) Date of filing: **04.02.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **05.02.2014 JP 2014020062**

(71) Applicants:
• **HAMAMATSU PHOTONICS K.K.**
  **Hamamatsu-shi**
  **Shizuoka 435-8558 (JP)**
• **Kyoto University**
  **Kyoto-shi, Kyoto 606-8501 (JP)**

(72) Inventors:
• **Yamauchi, Toyohiko**
  **Hamamatsu-shi, Shizuoka 435-8558 (JP)**

• **Fukami, Tadashi**
  **Hamamatsu-shi, Shizuoka 435-8558 (JP)**
• **Sugiyama, Norikazu**
  **Hamamatsu-shi, Shizuoka 435-8558 (JP)**
• **Iwai, Hidenao**
  **Hamamatsu-shi, Shizuoka 435-8558 (JP)**
• **Kakuno, Yumi**
  **Hamamatsu-shi, Shizuoka 435-8558 (JP)**
• **Goto, Kentaro**
  **Hamamatsu-shi, Shizuoka 435-8558 (JP)**
• **Nakatsuji, Norio**
  **Kyoto-shi, Kyoto 606-8501 (JP)**
• **Aiba, Kazuhiro**
  **Kyoto-shi, Kyoto 606-8501 (JP)**

(74) Representative: **Boult Wade Tennant**
**Verulam Gardens**
**70 Gray's Inn Road**
**London WC1X 8BT (GB)**

(54) **Cell evaluation method**

(57)     The present invention relates to a cell evaluation method comprising evaluating a cell differentiation degree based on a cell thickness.

EP 2 905 601 A1

**Description**

TECHNICAL FIELD

The present invention relates to a cell evaluation method.

BACKGROUND

Human-derived stem cells such as ES cells and iPS cells have an ability to differentiate into many kinds of cells (pluripotency). The stem cells have gotten attention, because they enable large-scale pharmacometrics and medical applications using human cells which have been difficult, such as analysis of diseases, drug discovery screening, toxicity testing, and regenerative medicine. A differentiation efficiency in differentiation induction from these stem cells into desired cells is considered to be largely dependent on the state of the stem cells as starting materials. That is, the efficiency of differentiation induction is lowered, unless the stem cells maintain pluripotency and keep an undifferentiated state. Thus, quality control of the stem cells is extremely important for industrial application of the stem cells, and the stem cells need to be monitored and noninvasively evaluated for their states.

In addition, since these stem cells form a confluent cell population (colony) by adhesion (contact) of approximately thousands to tens of thousands of stem cells, quality control is also usually conducted in increments of colonies.

For example, Patent Document 1 discloses a cell analytical method in a cell analyzer for analyzing a cell colony using an optical length image of a cell colony composed of a large number of cells, which is characterized by comprising an obtention step of obtaining the optical length image of the cell colony by an obtention means in the cell analyzer, an extraction step of extracting a circular shape corresponding to the cell nucleus of the cell in the obtained optical length image by an extraction means in the cell analyzer, a comparison step of comparing an inner optical length with an outer optical length of the extracted circular shape by the comparison means of the cell analyzer, and an analysis step of analyzing the cell colony by an analysis means in the cell analyzer based on the compared results.

In addition, Non-Patent Document 1 describes that mean optical lengths in cytoplasm regions in CHO cells, HeLa cells and osteoclast-like (OC) cells which were differentiated cells were smaller than those in their nuclear areas, on the contrary, a mean optical length in cytoplasm region in each hiPS cell in the colony was larger than that in its nuclear area, and that a ratio (cytoplasm/nucleus) of optical lengths can be a simple indicator for discriminating between the hiPS cells and other types of differentiated cells.

Patent Document 1: Japanese Patent Application Laid-Open No. 2012-231709

Non-Patent Document 1: Biomedical Optics Express, Vol. 3, issue 9, pp. 2175-2183 (2012).

SUMMARY OF THE INVENTION

Both the methods described in Patent Document 1 and Non-Patent Document 1 are methods for evaluating whether a cell is a stem cell based on a ratio between inner and outer optical lengths in a cell nucleus region.

Thus, the present inventors studied indicators for evaluating whether a cell is a stem cell, other than the ratio between inner and outer optical lengths of a cell nucleus region, and then newly found that a differentiation degree of the cell could be evaluated based on a cell thickness.

The present invention is based on this knowledge and intended to provide a novel cell evaluation method capable of evaluating a differentiation degree of the cell.

The present invention to achieve the object is a cell evaluation method characterized in that an evaluation step of evaluating a differentiation degree of the cell based on a cell thickness is included.

The cell evaluation method of the present invention is based on knowledge that the cell thickness of the stem cell is larger than that of the differentiated cell.

In the cell evaluation method of the present invention, the "cell" means "single cell or cell population."

In addition, the "thickness" means "physical length or optical length," and may also be "mean value" of (values of) a plurality of thicknesses. In addition, the "optical length" is synonymous with "phase difference" or "optical thickness" and is calculated by multiplying "refractive index difference" by "physical length (physical thickness)" (optical length = refractive index difference x physical length). The "refractive index difference" means a difference between a cell (intracellular) refractive index and an extracellular refractive index.

In addition, the "differentiation degree" means a "degree (extent) of differentiation from a stem cell having a differentiation ability to a cell having no differentiation ability (differentiated cell)."

When the cell thickness of the present invention is designated as a mean optical length represented by Formula (1), evaluation accuracy is improved.

$$\text{Mean optical length} = (C + N)/2 \cdots (1)$$

(wherein, N is an optical length on the inside of a cell nucleus region, and C is an optical length on the outside of the cell nucleus region.)

Particularly, the cell evaluation method of the present invention in which the evaluation step is a step of evaluating the differentiation degree of the cell based on the mean optical length represented by Formula (1) and the CN ratio represented by Formula (2) is extremely excellent in evaluation accuracy.

$$\text{CN ratio} = C/N \cdots (2)$$

(wherein, N is the optical length on the inside of the cell nucleus region, and C is the optical length on the outside of the cell nucleus region.)

Herein, the step of evaluating the differentiation degree of the cell based on the mean optical length and the CN ratio represented by Formula (2) may specifically include an evaluation by an optical length parameter represented by Formula (3).

$$\text{Optical length parameter} = (\text{mean optical length} - c1)^{\alpha} \cdot (\text{CN ratio} - c2)^{\beta} \cdots (3)$$

(wherein, c1 and c2 are any constants. In addition, $\alpha > 0$, $\beta \geq 0$, mean optical length = $(C + N)/2$ and CN ratio = $C/N$ are set, N is the optical length on the inside of the cell nucleus region, and C is the optical length on the outside of the cell nucleus region.)

In addition, the cell thickness of the present invention may be a physical length of the cell.

In addition, in the cell evaluation method of the present invention, when the cell is a single cell, a differentiation degree of the single cell can be evaluated, and when the cell is a cell population, a differentiation degree of the cell population can be evaluated.

The cell evaluation method of the present invention may further include an obtention step of obtaining cell observation data by observation of the cell using a microscope, and a determination step of determining the cell thickness based on the cell observation data. By the cell evaluation method of the present invention which further includes such steps, the differentiation degree of the observed cell can be evaluated.

Particularly, when the microscope is a phase microscope, the cell observation data can be simply converted into an optical length of the cell, and when the microscope is a reflecting quantitative phase microscope, a low-coherence interference microscope, a phase tomography microscope, an optical coherence tomography microscope, a confocal microscope or a differential interference microscope, the cell observation data can be simply converted into a physical length of the cell.

If the cell observation data is an image obtained by combining two or more cell observation images, accuracy of the cell thickness determined in the determination step is improved.

According to the present invention, a novel cell evaluation method which allows a differentiation degree of a cell to be evaluated can be provided.

BRIEF DESCRIPTION OF THE DRAWINGS

Fig. 1 is a schematic drawing of a pluripotent stem cell colony.
Fig. 2 is a schematic view showing a hardware constitution of the cell evaluation apparatus D.
Fig. 3 is a schematic view showing a functional constitution of the cell evaluation apparatus D.
Fig. 4 is an image obtained by combining the quantitative phase images without correction.
Fig. 5 is a schematic drawing of the image obtained by combining the quantitative phase images without correction.
Fig. 6 is a second schematic drawing of the image obtained by combining the quantitative phase images without correction.
Fig. 7 is an image obtained by combining and correcting the quantitative phase images.
Fig. 8 is a quantitative phase image of the H9 cell colony.

Fig. 9 is an enlarged view of Fig. 4.

Fig. 10 is an enlarged image of the H9 cell colony with stained cell nucleus.

Fig. 11 is an enlarged schematic drawing of the H9 cell colony ((A) in the figure), an enlarged schematic drawing showing a sampling range on the inside of the H9 cell nucleus region ((B) in the figure) and an enlarged schematic drawing showing a sampling range on the outside of the H9 cell nucleus region ((C) in the figure).

Fig. 12 is a scatter diagram of cells in the good colony ((A) in the figure) and a scatter diagram of cells in the bad colony ((B) in the figure).

Fig. 13 is a histogram of the CN ratio ((A) in the figure) and a histogram of the mean optical length ((B) in the figure).

Fig. 14 is a contour diagram of the QPM score.

Fig. 15 is a histogram of the QPM score.

Fig. 16 is ROC curves of the CN ratio, the mean optical length and the QPM score.

Fig. 17 is a scatter diagram of the CN ratios of respective colonies ((A) in the figure), a scatter diagram of the mean optical lengths of respective colonies ((B) in the figure) and a scatter diagram of the QPM scores of respective colonies ((C) in the figure).

Figs. 18 are figures showing shapes of the bottoms and surfaces of the cells extracted from the three-dimensional data in the reflecting quantitative phase microscope.

Figs. 19 are figures obtained by quantifying and plotting the three-dimensional data of the cells in the reflecting quantitative phase microscope. In the figures, (A) is a plot figure of the iPS cell, (B) is a plot figure of the iPS cell cultured by adding retinoic acid (differentiated cell).

Figs. 20 are figures showing that it can be evaluated whether cells are iPS cells based on either the mean optical length or the physical length. In relation to the same iPS cell colonies and differentiated cell colonies, (A) in the figures shows the difference in the physical lengths, (B) in the figures shows the difference in the mean optical lengths.

DETAILED DESCRIPTION

Preferred embodiments of the present invention will be described in detail. The cell evaluation method of the present invention includes "an evaluation step of evaluating a differentiation degree of a cell based on a cell thickness."

Herein, "cell" means "single cell or cell population," and only in the case of this meaning, cell is not particularly restricted and may not be stained. The cell may be not only human cells but also cells of a mouse, monkey, rabbit, dog, cat, etc. In addition, the cell may be any cell (stem cell) having an ability to differentiate into plural lines of cells (pluripotency) and an ability to maintain the pluripotency even through cell division (self-renewal ability), and may also be any differentiated cell. The stem cell may include, for example, pluripotent stem cells such as ESs cells and iPS cells. In addition, a pluripotent stem cell can be a cell expressing a nanog gene, because the nanog gene is expressed at the time close to the final stage of the change into a pluripotent stem cell and the nanog gene-expressing cell tightly maintains properties as a pluripotent stem cell.

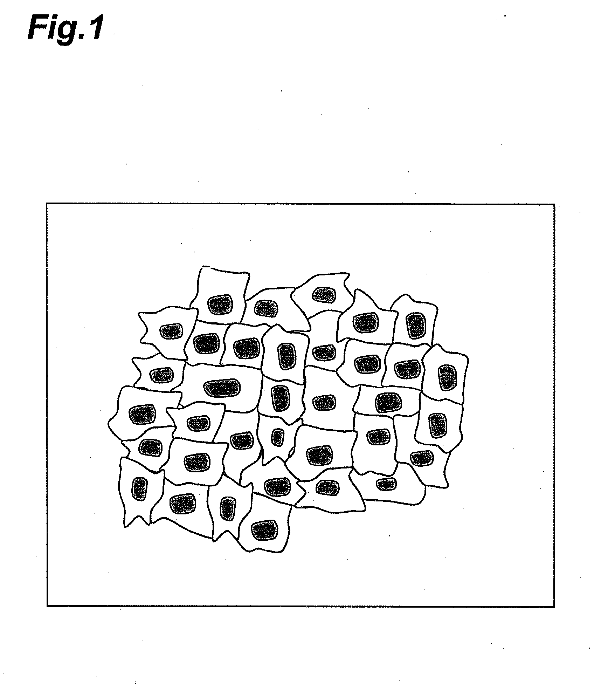

The cell population includes the colony and its small mass. The cell forming cell populations may be only a stem cell, may be a stem cell and a differentiated cell, or may be only a differentiated cell. A schematic drawing of a colony of pluripotent stem cells is shown in Fig. 1.

Although the cell need not be a cultured cell, it is usually a cultured cell.

In addition, the "thickness" means "physical length or optical length," and may also be "mean value" of (values of) a plurality of thicknesses. In addition, the "optical length" is synonymous with "phase difference" or "optical thickness" and is calculated by multiplying "refractive index difference" by "physical length (physical thickness)" (optical length = refractive index difference x physical length), and the optical length and the physical length correlate with each other. The "refractive index difference" means difference between a cell (intracellular) refractive index and an extracellular refractive index. For example, if a refractive index of a cell is 1.370 and a refractive index of an extracellular culture is 1.335, a refractive index difference is 0.035.

A thickness of a single cell may be represented by either one cell thickness in the single cells or a mean value of the (values of) plural cell thicknesses in the single cells. In addition, a cell thickness of a cell population may be represented by either a cell thickness of one cell constituting the cell population or a mean value of the (values of) cell thicknesses of plural cells constituting the cell population. As a matter of course, the thickness of one cell or the thicknesses of plural cells constituting the cell population may be represented by either one cell thickness or a mean value of the (values of) plural cell thicknesses.

The optical length is preferably a mean optical length represented by Formula (1). A mean optical length of a cell population may be a mean value of a mean optical length of plural cells constituting the cell population. When the cell thickness is designated as a mean optical length, evaluation accuracy is improved.

$$\text{Mean optical length} = (C + N)/2 \cdots (1)$$

(wherein, N is an optical length on the inside of a cell nucleus region, and C is an optical length on the outside of the cell nucleus region.)

In addition, the cell thickness may be a physical length of the cell. For the cell thickness, either the optical length or the physical length can be optionally selected.

In the evaluation step, the evaluation only needs to be carried out based on the cell thickness, and it does not mean that the evaluation needs to be carried out by the cell thickness itself. For example, in the evaluation step, the differentiation degree of the cell may be evaluated based on an increasing function (monotonically increasing function) value or a decreasing function (monotonically decreasing function) value of the cell thickness, or the cell thickness and other indicators, particularly a CN ratio represented by Formula (2). A CN ratio of a cell population may be a mean value of CN ratios of plural cells constituting the cell population.

$$\text{CN ratio} = C/N \cdots (2)$$

(wherein, N is the optical length on the inside of the cell nucleus region, and C is the optical length on the outside of the cell nucleus region.)

Particularly, the cell evaluation method in which the evaluation step is a step of evaluating the differentiation degree of the cell by the mean optical length and the CN ratio is extremely excellent in evaluation accuracy.

Herein, the step of evaluating the differentiation degree of the cell by the mean optical length and the CN ratio may specifically include an evaluation based on an optical length parameter represented by Formula (3). The optical length parameter of the cell population may be a mean value of optical length parameters of plural cells constituting the cell population.

$$\text{Optical length parameter} = (\text{mean optical length} - c_1)^{\alpha} \cdot (\text{CN ratio}$$

$$- c_2)^{\beta} \cdots (3)$$

(wherein, $c_1$ and $c_2$ are any constants. In addition, $\alpha > 0$, $\beta \geq 0$, mean optical length = (C + N)/2 and CN ratio = C/N are set, N is the optical length on the inside of the cell nucleus region, and C is the optical length on the outside of the cell nucleus region.)

In Formula (3), $c_1$, $c_2$, $\alpha$ and $\beta$ can be set so that the evaluation accuracy is improved. Although $c_1$ is not restricted, it may be set in a range of -400 to 400, preferably -200 to 200, and may be 0. Preferably, $c_2$ is set based on a CN ratio with decreased percentage of differentiated cells. $c_2$ is set in a range of, for example, 0.6 - 0.9, preferably 0.7 - 0.85, and more preferably 0.8. Although $\alpha$ only needs to be larger than 0, $\alpha$ is usually an integer, preferably 1 or 2, more preferably 1. In addition, although $\beta$ only needs to also be 0 or larger, $\beta$ is usually an integer, preferably 0 or 1.

It is particularly preferable that $c_1$ is 0, $\alpha$ is 1, and $\beta$ is 0, and in this case, the optical length parameter is a mean optical length.

Also, it is particularly preferable that $c_1$ is 0, and $\alpha$ and $\beta$ are 1, and in this case, the optical length parameter is a QPM score represented by Formula (4).

$$\text{QPM score} = \text{mean optical length} \cdot (\text{CN ratio} - c_2)$$

$$= (C + N)/2 \cdot (C/N - c_2) \cdots (4)$$

The "differentiation degree" is "degree (extent) of differentiation from a stem cell having a differentiation ability to a cell having no differentiation ability (differentiated cell)."

It has been conventionally known that genes SSEA1, OCT-4, nanog are sequentially expressed with a change of a somatic cell into an iPS cell (Tobias Brambrink et al., "Sequential Expression of Pluripotency Markers during Direct Reprogramming of Mouse Somatic Cells," Cell Stem Cell, Vol. 2, pp. 151-159, February 2008), and there is a gradual change in the cellular state between a differentiated cell and a stem cell. From this fact and the present inventor's new knowledge that the stem cell is thicker than the differentiated cell, it is considered that a differentiation degree of a cell can be evaluated based on a cell thickness.

Based on the cell thickness, the evaluation step of evaluating the differentiation degree of a cell may include a step of evaluating whether a cell is a stem cell based on the cell thickness.

In order to evaluate whether a cell is a stem cell based on the cell thickness, conventionally a value of an indicator based on the cell thickness is initially compared with a prescribed value of the indicator (set threshold). Specifically, the set threshold is a value between the value of the indicator based on the cell thickness of a stem cell and the value of the indicator of the differentiated cell, and is a prescribed value. In addition, as a matter of course, the value of the indicator may be a mean value. Next, whether the cell is a stem cell is evaluated based on the comparative results.

For example, when the evaluation is carried out by the cell thickness, the cell thickness is compared with the prescribed threshold of the cell thickness (set cell thickness). Specifically, the sizes are compared between the cell thickness and the set cell thickness to distinguish between larger cell thicknesses and smaller cell thicknesses than the set cell thickness. In addition, the set cell thickness is set by previously investigating the cell thicknesses of the stem cell and the differentiated cell, and usually set so that the evaluation accuracy is excellent. When the cell thickness is larger than the set cell thickness, it is judged that the cell is a stem cell, and when the cell thickness is smaller than the set cell thickness, it is judged that the cell is not a stem cell.

The same applies to a case where it is evaluated whether a cell is a stem cell based on the cell thicknesses and other indicators, particularly a CN ratio. For example, when the evaluation is carried out by an optical length parameter such as a QPM score, the optical length parameter is compared with the prescribed threshold of the parameter (set parameter) to evaluate whether the cell is a stem cell. When the optical length parameter is larger than the set parameter, it is judged that the cell is a stem cell, and when the optical length parameter is smaller than the set parameter, it is judged that the cell is not a stem cell.

Not only one but also two or more set thresholds can be set. The cells are sorted into any of the (number of the set thresholds+1) groups. When the number of the set threshold is one, the cells are sorted into any of two groups i.e., stem cells and differentiated cells as mentioned above, and when the number of the set threshold is two, the cells are sorted into any of three groups (for example, highly-differentiated cells, moderately-differentiated cells and lowly-differentiated cells).

In addition, a differentiation degree (%) may be calculated based on values of indicators based on cell thicknesses, in such a way that the value of an indicator based on the cell thickness of the stem cell corresponds to 0% of differentiation degree, and that of the differentiated cell corresponds to 100% of differentiation degree.

When a cell is a single cell, whether the single cell is a single stem cell can be evaluated, and when a cell is a cell population, whether the cell population is a stem cell population can be evaluated.

The results of evaluation may be finally displayed on a screen. When the object of evaluation is to distinguish cells, preferably the results are displayed on the screen for understanding that the observed cells are stem cells or differentiated cells.

The cell evaluation method of the present invention only needs to include "evaluation step of evaluating a differentiation degree of a cell based on a cell thickness." Although steps before the determination of the cell thickness are not restricted, one example of the steps before the determination of the cell thickness will be explained.

The steps before determination of the cell thickness may include for example, an obtention step of obtaining cell observation data by observation of a cell using a microscope, and a determination step of determining the cell thickness based on the cell observation data. By the cell evaluation method which further includes such steps, it can be evaluated whether the observed cell is a stem cell.

First, the obtention step will be explained. A microscope may include primarily a phase microscope, for example, a quantitative phase microscope such as a transmission quantitative phase microscope and a reflecting quantitative phase microscope, and a phase contrast microscope.

Also, the microscope may include a microscope capable of three-dimensional imaging such as a reflecting quantitative phase microscope, a low-coherence interference microscope, a phase tomography microscope, an optical coherence tomography microscope, a confocal microscope and a differential interference microscope. In addition, the differential interference microscope is preferably a microscope which comprises a mechanism for imaging two or more cell observation images while continuously changing the focus.

Furthermore, the microscope may be a scanning probe microscope or the like.

Particularly, when the microscope is a phase microscope, the cell observation data can be readily converted into optical length of a cell. Above all, the transmission quantitative phase microscope is preferable. In addition, when the microscope is the microscope capable of three-dimensional imaging, the cell observation data can be readily converted into a physical length of the cell. Above all, the reflecting quantitative phase microscope and the confocal microscope are preferable.

Although the state of a cell in observation of a cell using the microscope is not particularly restricted, it is preferable that the state of a cell is in a state of a single layer suitable for observation using the microscope. In addition, although a cell can be cultured in a glass culture dish, a cover glass, etc., and observed as it is by using a microscope, it is preferable that the surface of the glass has antireflection coating. Thereby, the influence by reflection of light from the glass can be reduced when a cell is observed using the microscope.

The cell observation data is data obtained by observing the cell using the microscope (microscope data of the cell), and the data only needs to be the cell thickness itself or data which can be converted into the cell thickness. The data also includes images (image data).

The cell observation data may include primarily a phase microscope image of the cell, for example, a quantitative phase microscope image (quantitative phase image) of the cell, a phase contrast microscope image (phase contrast image) of the cell, etc.

In addition, other cell observation data may include three-dimensional data and tomographic images of cells obtained by a microscope capable of three-dimensional imaging, for example, a reflecting quantitative phase microscope, a low-coherence interference microscope, a phase tomography microscope, an optical coherence tomography microscope, a confocal microscope, a differential interference microscope, etc.

Furthermore, data by a scanning probe microscope, for example, a physical length between bottom and surface of a cell is also the cell observation data.

Above all, quantitative phase images of cells are preferable as the cell observation data.

Next, the determination step will be explained.

A cell thickness is determined based on cell observation data. When the cell observation data is a cell thickness itself, it can be determined as the cell thickness. For example, a physical length between the bottom and surface of a cell which is scanning probe microscope data can be determined as the cell thickness as is.

When the cell observation data is not the cell thickness, the cell observation data is converted into the cell thickness. In addition, prior to conversion into the cell thickness, data processing of the cell observation data, for example, enlargement and reduction of the cell observation image, brightness adjustment, correction such as subtraction and addition of images may be carried out as required. In addition, the cell observation image may be an image obtained by combining (joining) two or more cell observation images (connected images). As a matter of course, each cell observation image may be corrected as required before or after combination. For example, an image obtained by appropriately correcting and combining phase values in quantitative phase images of two or more cells can be regarded as the cell observation image.

For example, when the cell observation data is a phase microscope image of a cell, particularly, a quantitative phase image of a cell and a phase contrast image of a cell, the image is converted into an optical length of the cell.

In addition, for example, when the cell observation data is three-dimensional data and tomographic images of a cell obtained by a microscope capable of three-dimensional imaging, particularly, a reflecting quantitative phase microscope, a low-coherence interference microscope, a phase tomography microscope, an optical coherence tomography microscope, a confocal microscope and a differential interference microscope, these are converted into a physical length of the cell.

Furthermore, according to necessity, one cell thickness can be selected from plural cell thicknesses, and a mean value of thicknesses in one cell can be derived by averaging plural cell thicknesses. For example, plural cell thicknesses in one cell are averaged, which can be regarded as a thickness of one cell representing the cell.

The number of the cell thickness to be determined only needs to be one or more, and is not restricted, however, usually one cell thickness is determined per cell to be evaluated.

(Cell evaluation apparatus)

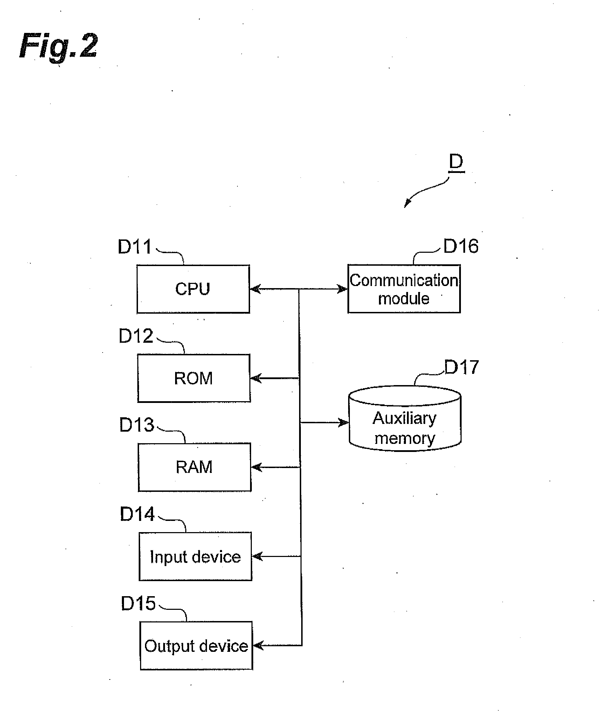

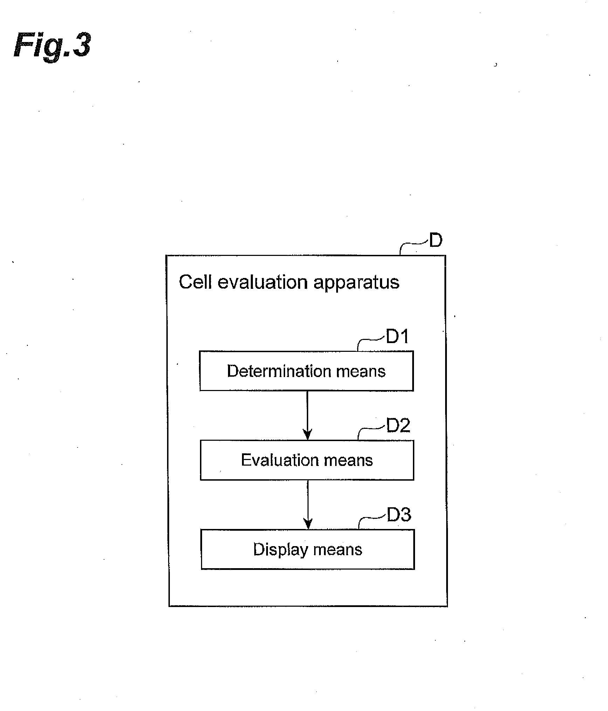

A cell evaluation apparatus to be used in the cell evaluation method of the present invention will be explained. Fig. 2 is a schematic view showing a hardware constitution of the cell evaluation apparatus related to one embodiment, and Fig. 3 is a schematic view showing a functional constitution of the cell evaluation apparatus related to one embodiment.

As shown in Fig. 2, the cell evaluation apparatus D is constituted as a conventional computer which physically comprises a CPU D11, a main memory such as ROM D12 and RAM D13, an input device D14 such as a keyboard and mouse, an output device D15 such as a display, a communication module D16 such as a network card for transmission and reception of data in communication with other devices, an auxiliary memory D17 such as a hard disk, etc. Each function of the cell evaluation apparatus mentioned below can be achieved by loading a given computer software on hardware such as CPU D11, ROM D12 and RAM D13, activating the input device D14, the output device D15 and the communication module D16 under control of the CPU D11, and reading and writing the data in the main memory D12 and D 13 as well as the auxiliary memory D 17.

As shown in Fig. 3, the cell evaluation apparatus D comprises a determination means D1, an evaluation means D2 and a display means D3 as functional components. The cell evaluation apparatus receives cell observation data through reception by the communication module D16, input by the input device D 14, etc.

The determination means D1 determines the cell thickness based on the cell observation data. The evaluation means D2 determines the differentiation degree of the cell based on the cell thickness. The display means D3 indicates the results of evaluation.

(Cell evaluation program)

A cell evaluation program allows the computer to function as the determination means D1, the evaluation means D2 and the display means D3. The computer acts as the cell evaluation device by loading the cell evaluation program on the computer. The cell evaluation program is provided in such a way that it is stored in, for example, a storage medium. In addition, the storage medium is exemplified by a storage medium such as a flexible disc, CD and DVD, a storage medium such as a ROM, a semiconductor memory or the like.

As mentioned above, although embodiments of the present invention have been explained, as a matter of course, the present invention is not restricted to the above-mentioned embodiments.

[Examples]

(Example 1)

[Obtention of pluripotent stem cell samples]

As cell strains of human pluripotent stem cells, H9 (human ES cell), khES-3 (human ES cell) and IMR-90-1 (human iPS cell) were prepared and cultured. In order to artificially produce both undifferentiated normal pluripotent stem cells and differentiated abnormal cells, culturing was intentionally conducted in an inappropriate culturing condition. Specifically, culturing was continued beyond an appropriate number of days for subculturing (3 days/subculturing) to produce a sample in a state that the cell colony had overgrown (an overgrowth state). This cell population in an overgrowth state is considered to contain both the undifferentiated normal pluripotent stem cells and the differentiated abnormal cells. Furthermore, a cell sample in a single-layer culturing state suitable for microscope observation was obtained by subculturing this sample in the overgrowth state in a separate culture dish.

[Obtention of a quantitative phase image]

This cell sample was observed 2 - 3 days after the subculturing. For observation, a transmission quantitative phase microscope (see Patent Document 1 and Non-Patent Document 1) was used. The transmission quantitative phase microscope is a microscope which can image an optical length (physical length x refractive index difference) of a living cell without using a fluorescent dye or the like but utilizes interference of light. Since an entire culture dish is not within one visual field of the microscope, plural images are taken while sliding the visual field and combined (connected) after the imaging to obtain a transmission quantitative phase microscopic image (quantitative phase image) of an entire culture dish. In addition, in order to precisely cut out a region of the cell nucleus from the quantitative phase image, the cell nucleus was stained by a vital stain (Hoechst33342) before imaging of the quantitative phase image, and simultaneously imaged.

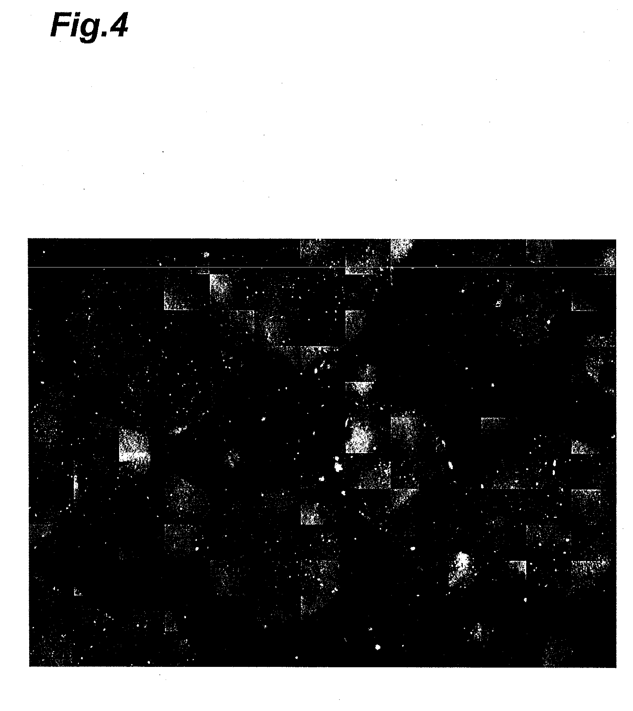

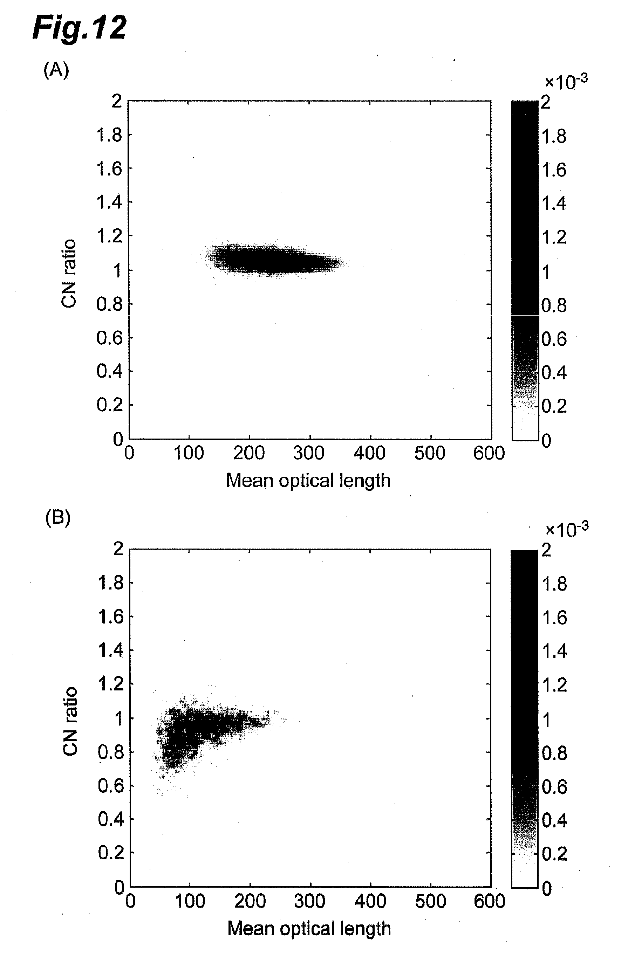

When the optical length (optical thickness) of the human pluripotent stem cell is calculated as an absolute value, the images need to be appropriately combined. For example, plural quantitative phase images of the human ES cell colony measured by the quantitative phase microscope were taken while changing the visual field, and images combined without correction are shown in Fig. 4. In Fig. 4, 12 vertical x 13 horizontal visual field images are arranged. In the quantitative phase image, the image showing the optical length of the cell is likely to generate slopes and offsets in brightness value, and thus when a distribution of a true phase value is designated as $\varphi T (x, y)$, the measured phase value is represented by $\varphi o (x, y) = \varphi T (x, y) + Offs + Sx*x + Sy*y$. Sx is a slope in an x-coordinate direction, Sy is a slope in a y-coordinate direction, and Offs is an offset value of the image.

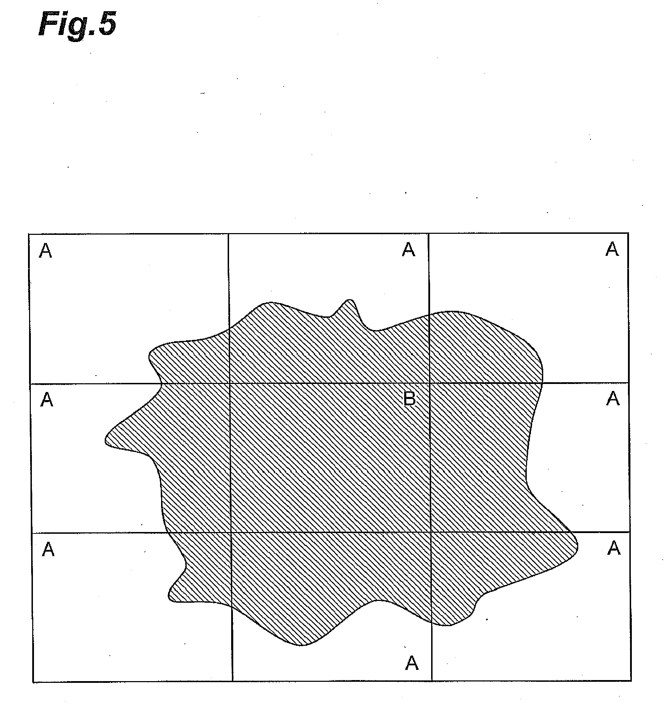

When this image is corrected, first, each visual field is corrected. A schematic drawing of an image in which the quantitative phase images are combined without correction is shown in Fig. 5. Fig. 5 shows an area of the cell colony marked with diagonal lines and a non-marked background area, and the visual field includes 9 fields of 3 x 3. For the visual field A including the background area, a true phase value can be derived by correction of the background image. That is, when the background image is represented by $Bg = Offs\_B + Sx\_B*x + Sy\_B*y$, 3 or more pixels as the background are picked up, and when mean squared errors $\varepsilon$ (Formula (5)) for their $(x1, y1), (x2, y2), (x3, y3) ... (xN, yN)$ are represented by

[Formula 1]

$$\varepsilon = \frac{\sum_{n=1}^{N} \left( \phi_O \left( x_n, y_n \right) - \left( \text{Offs\_B} + \text{Sx\_B} * x_n + \text{Sy\_B} * y_n \right) \right)^2}{N}$$

$$\cdots (5),$$

the background image can be estimated by calculating Offs_B, Sx_B and Sy_B with minimized $\varepsilon$. In this way, the visual field including the background area can be corrected by estimating the background image and subtracting it from the quantitative phase image.

Next, visual fields including no background area is corrected. For example, the visual field B in Fig. 5 corresponds to this visual field including no background area. If the true phase distributions of the visual field A have already been settled, phase distributions to be fulfilled in this visual field B can be determined for the left, right, top and bottom of four sides. Thus, in relation to the visual field like a visual field B, if the pixels of the sides of which the true phase distributions have already been settled are designated as (x1, y1), (x2, y2), (x3, y3) ... (xN, yN), and the phase values of the pixels corresponding to the already settled sides are designated as ø1, ø2, ø3 ... øN, a background image can be estimated by calculating Offs_B, Sx_B and Sy_B with minimized mean squared errors $\varepsilon$ represented by Formula (6), i.e.,

[Formula 2]

$$\varepsilon = \frac{\sum_{n=1}^{N} \left( \phi_n - \left( \phi_O \left( x_n, y_n \right) - \left( \text{Offs\_B} + \text{Sx\_B} * x_n + \text{Sy\_B} * y_n \right) \right) \right)^2}{N}$$

$$\cdots (6).$$

In this way, the background image is estimated and subtracted from the quantitative phase image, and thereby the visual field including no background area can also be corrected.

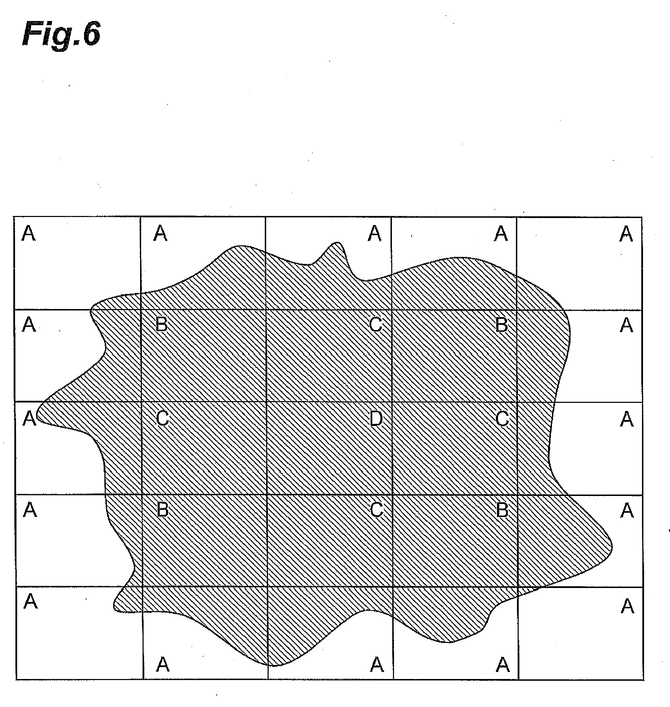

Fig. 6 is a second schematic drawing of the image obtained by combining the quantitative phase images without correction. In a case of the image of Fig. 6, the visual field D cannot be quickly corrected even after the correction of the visual fields including the background images, because all sides are not in contact with the visual fields with the settled true phase values. In such a case, from the visual fields having more sides in contact with the images in which true phase values have already settled by correction of the background images, specifically, the visual field B in Fig. 6, correction is started by the above-mentioned method. Therefore, the visual fields additionally corrected as well as the visual fields having more sides in contact with the images in which true phase values have already been settled, specifically, the visual field C in Fig. 6 are corrected, and eventually the visual field D is corrected to allow correction of the entire visual fields.

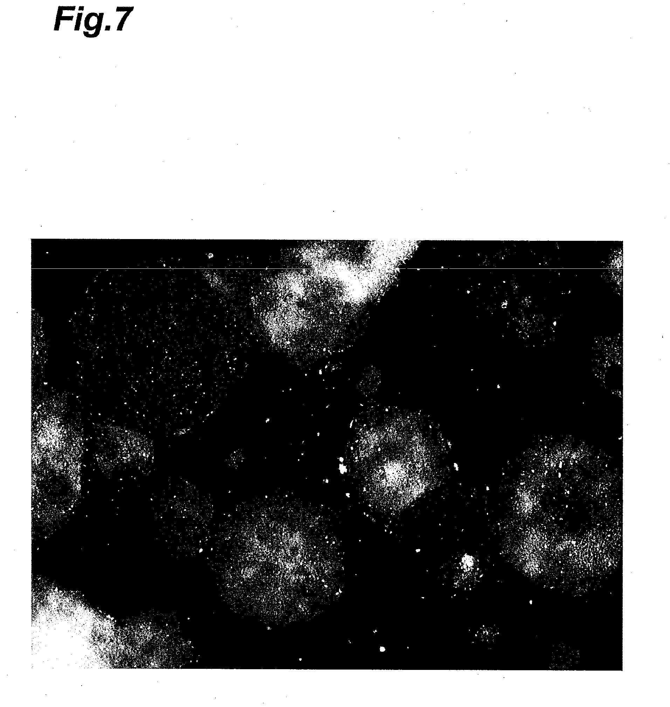

In this way, an image after correction of the image (Fig. 4) obtained by combining the quantitative phase images without correction is shown in Fig. 7. It is found that the absolute value of the phase was correctly imaged. Since the absolute value of the phase is proportional to the optical length, such correction enables the absolute quantitation of the optical length.

[Distinguishing colonies]

After obtention of the quantitative phase image, 4% of the sample was fixed and immuno-stained. For staining, an anti-nanog-Alexa488 antibody (nanog) was used. The nanog is a homeodomain protein which can be an undifferentiated marker. A threshold was set for brightness in the nanog staining to distinguish the pluripotent stem cells from the differentiated cells. A colony having 60% or more of the pluripotent stem cells was designated as a good colony, and a colony having 40% or less of the pluripotent stem cells was designated as a bad colony, and a colony which is between these was designated as a good/bad colony-mixed colony. Distinguishing between these good/bad colonies was regarded as a right result, and image processing procedures for evaluating the pluripotent stem cells were compared and examined only from information of the quantitative phase image.

For example, the H9 cell will be described in detail. For the H9 cell, 103 colonies in 11 dishes were analyzed. From the results of the nanog staining, it was found that, among the 103 colonies, there were 52 good colonies, 49 bad colonies, and 3 good/bad-mixed colonies. The analyzed cells included a total of 32893 cells in the good colonies, a total of 5094 cells in the bad colonies, and a total of 130 cells in the good/bad-mixed colonies.

[Quantitation of the optical length]

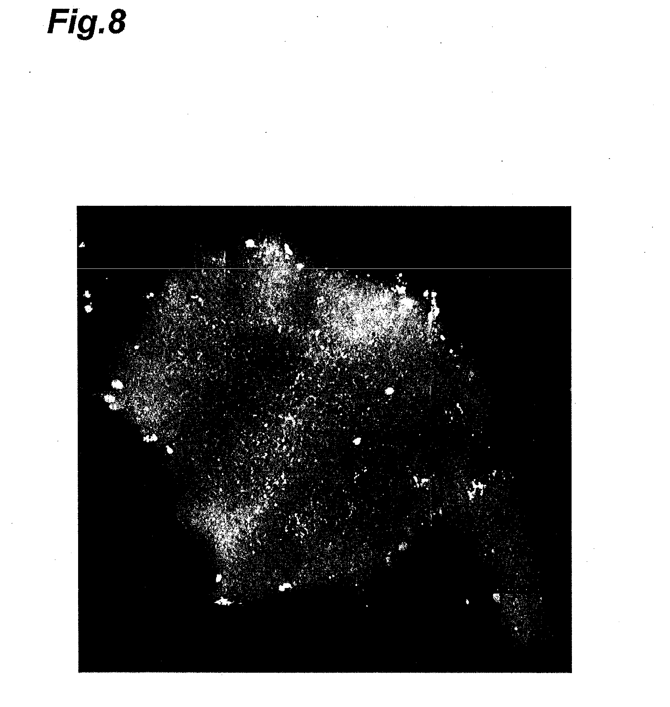

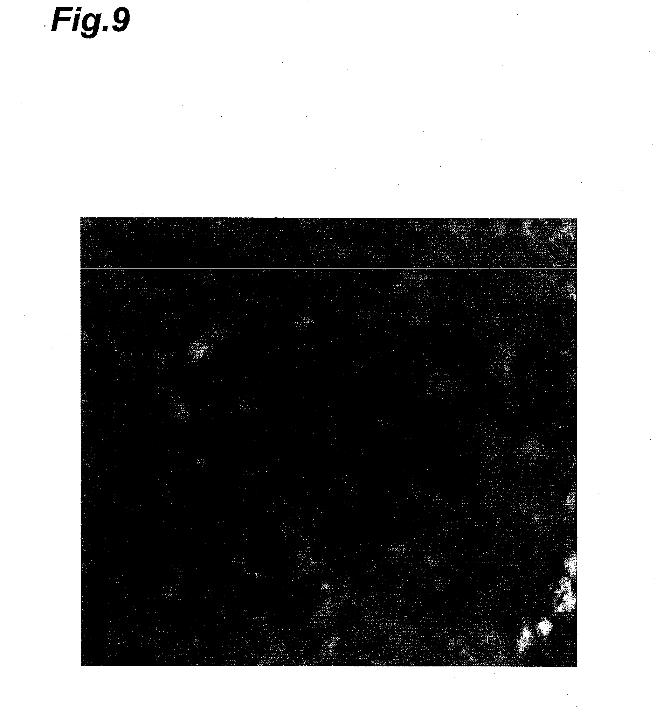

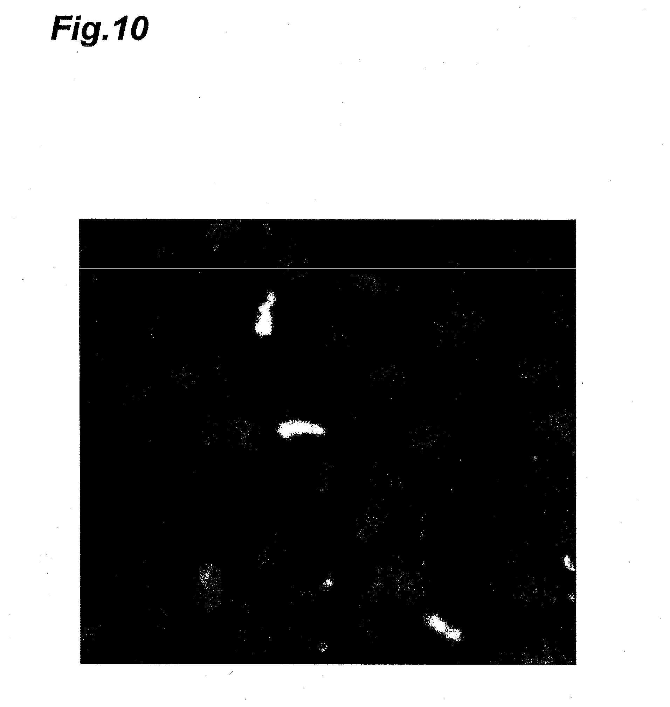

For each one of the cells to form these colonies, the quantitative phase image was analyzed. Fig. 8 is a quantitative phase image of the H9 cell colony, and Fig. 9 is its magnified view. The brightness of the quantitative phase image represents the optical length of the cell. This colony is one example of a good colony in which 99.8% or more of the cells were judged as pluripotent stem cells by immunostaining. The quantitative phase image was taken by a 20-power objective lens, and each one of the cells can be visualized by magnification. In addition, an enlarged image of the H9 cell colony in which the cell nucleus was stained for identifying a position of the cell nucleus is shown in Fig. 10.

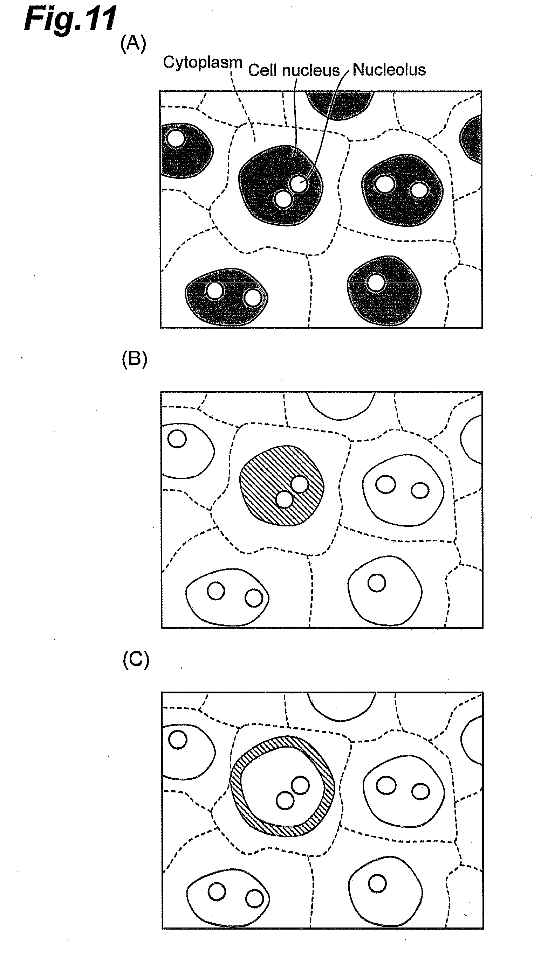

Fig. 9 shows that the optical length on the inside of the cell nucleus region tends to be shorter than the optical length on the outside of the cell nucleus. In order to quantitatively measure this tendency, the optical lengths on the inside and outside of the cell nucleus regions were sampled on each one of all cells from which the cell nucleus regions could be extracted, and statistically processed. For explaining the sampling range, an enlarged schematic drawing of the quantitative phase image is shown in Fig. 11(A). The sampling range on the inside of the cell nucleus region is designated as entire region in the cell nucleus except for the nucleolus as shown in the hatched area of Fig. 11(B), and each optical length of the cells was averaged. The sampling range on the outside of the cell nucleus region is designated as a doughnut-shaped region around the cell nucleus region as shown in the hatched area of Fig. 11(C), and each physical length of the cells was averaged.

As a result, for 32893 cells in the good colonies, 5094 cells in the bad colonies, and 130 cells in the good/bad-mixed colonies, quantitative values of the optical lengths on the inside and outside of the cell nucleus regions could be obtained, as mentioned above. In addition, the position of the cell nucleus was identified based on the Hoechst33342 cell nucleus staining image. The cell nucleus is stained for improving the accuracy of the experiment, and the position of the cell nucleus can be roughly identified only by the quantitative phase image without the cell nucleus staining.

[Calculation of mean optical length]

A mean optical length and a CN ratio were calculated from the quantitative values of the measured cell optical lengths. The mean optical length is a value calculated by "mean optical length = (C + N)/2" (unit: nanometer), and the CN ratio is a value calculated by "CN ratio = C/N." Herein, N is the optical length on the inside of the cell nucleus region, and C is the optical length on the outside of the cell nucleus region.

[Mean optical length as a criterion]

The scatter diagram (scattergram) of the cells in the good colonies is shown in Fig. 12(A), and the scatter diagram of the cells in the bad colonies is shown in Fig. 12(B). Herein, the horizontal axis is the mean optical length, and the vertical axis is the CN ratio. These scatter diagrams show a tendency that "the good colonies have CN ratio > 1, and the bad colonies have CN ratio < 1," and a tendency that the mean optical length of the cells in the bad colonies is smaller than that in the good colonies. In other words, this means that the cells in the bad colonies are generally thinner than those in the good colonies.

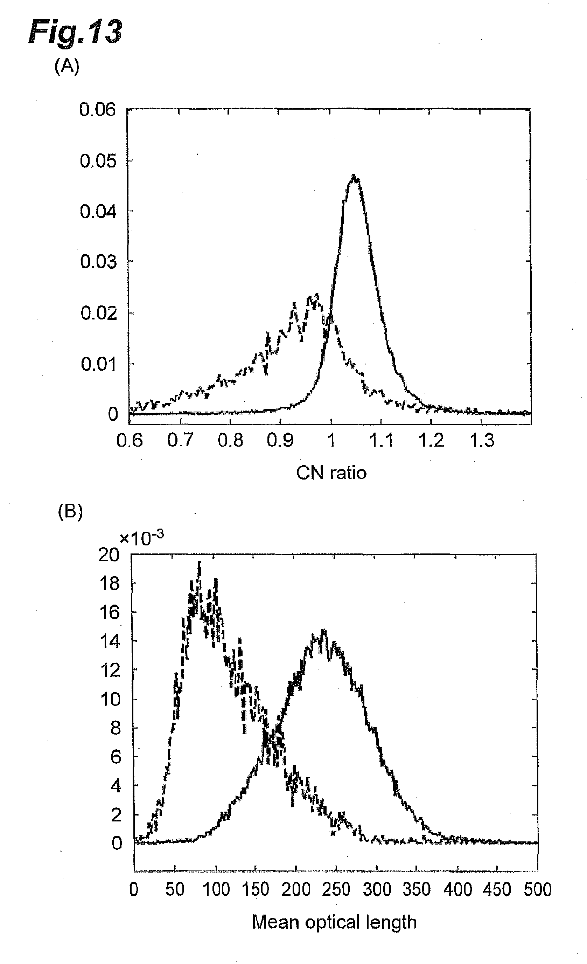

Furthermore, the histogram of the CN ratio is shown in Fig. 13(A), and the histogram of the mean optical length is shown in Fig. 13(B). In these histograms, the solid line is of the pluripotent stem cell, and the dashed line is of the differentiated cell. Fig. 13(A) and Fig. 13(B) show that not only the CN ratio but also the mean optical length can be indicators for evaluating whether the cell is a pluripotent stem cell.

[QPM score as a criterion]

QPM score = mean optical length·(CN ratio - c2) is described above, however, when CN ratio = 0.8 with the percentage of the differentiated cells being approximately zero is designated as an offset (i.e., c2 = 0.8),
QPM score = mean optical length·(CN ratio - 0.8)

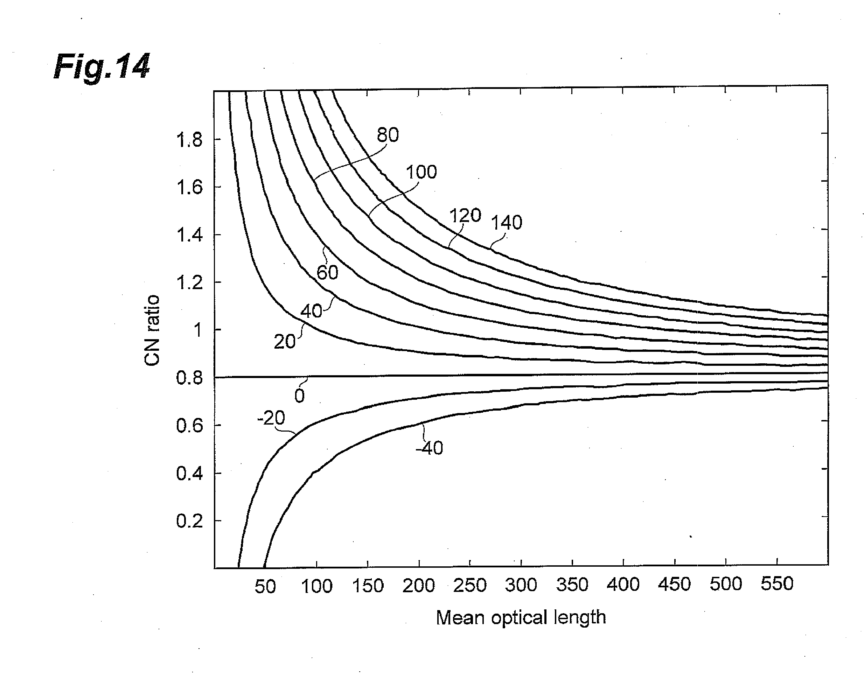

is derived (contour diagram of this QPM score is shown in Fig. 14).

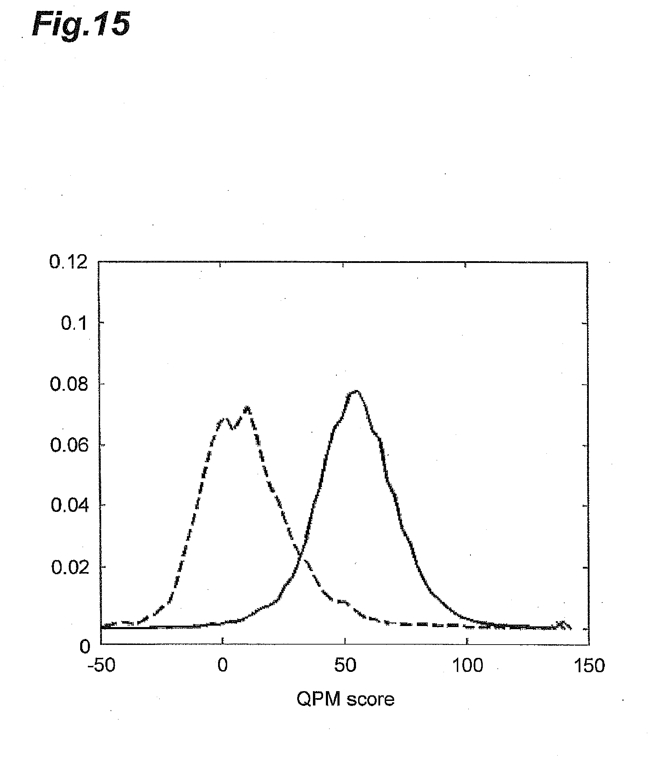

The histogram of this QPM score is shown in Fig. 15. The solid line is of the pluripotent stem cell, and the dashed line is of the differentiated cell in Fig. 15. From a contrast between Fig. 13(A), Fig. 13(B) and Fig. 15, it is revealed that the QPM score can also be a criterion for evaluating whether the cell is a pluripotent stem cell, and that the QPM score is a better indicator for evaluating whether the cell is a pluripotent stem cell than the CN ratio and the mean optical length.

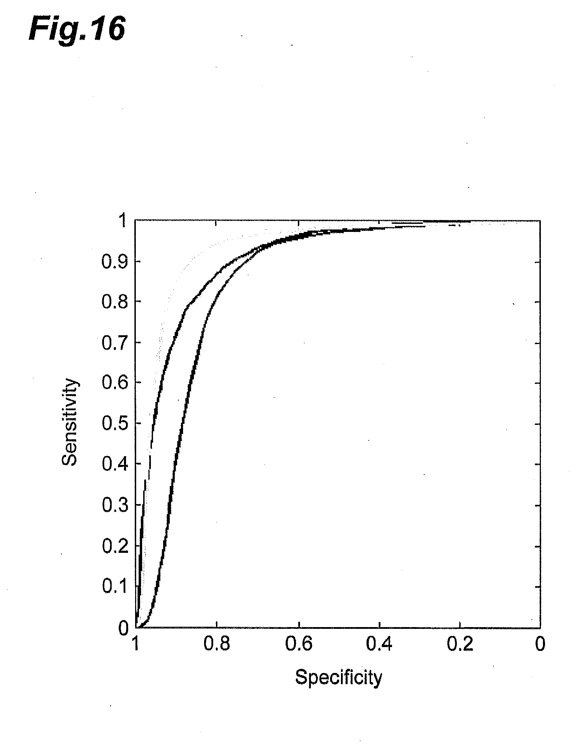

Furthermore, ROC curves were drawn for the CN ratio, the mean optical length and the QPM score so as to obtain Fig. 16. The top left ROC curve is of the QPM score, the subjacent ROC curve is of the mean optical length, and the bottom right ROC curve is of the CN ratio. In relation to the ROC curve, the nearer upper left the curve is, the better the indicator is, and Fig. 16 shows that the QPM score is a better indicator than the CN ratio and the mean optical length. Sensitivity (true positive rate) = 0.90 and specificity (false positive rate) = 0.86 can be achieved by using the QPM score (Fig. 16).

[Evaluation accuracy of colonies]

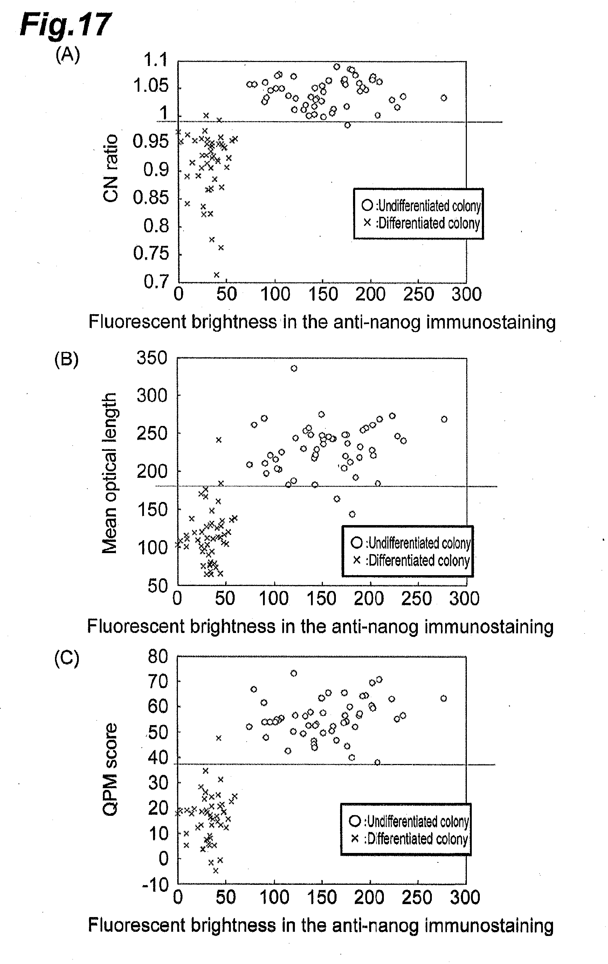

A CN ratio, a mean optical length and a QPM score were calculated for each one of all cells in each colony, then mean values of CN ratio, mean optical length and QPM score were calculated for each colony to obtain a CN ratio, a mean optical length and a QPM score of each colony. Fig. 17(A) is a scatter diagram of the CN ratio of each colony, Fig. 17(B) is a scatter diagram of the mean optical length of each colony, and Fig. 17(C) is a scatter diagram of the QPM score of each colony. In Fig. 17(A), Fig. 17(B) and Fig. 17(C), the vertical axes are the CN ratio, the mean optical length and the QPM score respectively, the horizontal axes are fluorescent brightnesses for the anti-nanog immunostaining (mean values), and the mark ○ represents the undifferentiated colony (pluripotent stem cell colony), and the mark x represents the differentiated colony (differentiated cell colony). Additionally, the transverse lines in Fig. 17(A), Fig. 17(B) and Fig. 17(C) are respectively a CN ratio, a mean optical length and a QPM score (threshold) which were set.
Results of evaluation of each colony by comparing the CN ratio, the mean optical length and the QPM score with the threshold in each colony are shown in Table 1. In Table 1, the correct evaluation rate means a rate of differentiated cell colonies judged to be "differentiated cell colony" in the case of that the differentiated cell colony is designated as "positive," and the false positive rate means a rate of pluripotent stem cell colonies incorrectly judged to be "differentiated cell colony" in the case that the differentiated cell colony is designated as "positive."

[Table 1]

|  | Threshold | Correct evaluation rate (Differentiated cell colonies judged to be "differentiated cell colony") | False positive rate (Pluripotent stem cell colonies incorrectly judged to be "differentiated cell colony") |
|---|---|---|---|
| CN ratio | 0.985 | 47/49 | 1/52 |
| Mean optical length | 180 | 47/49 | 2/52 |
| QPM score | 38 | 48/49 | 0/52 |

Table 1 shows that the method for evaluating whether each colony is a pluripotent stem cell colony by comparing the mean optical length of each colony with its threshold has good evaluation accuracy, and particularly a method for evaluating whether each colony is a pluripotent stem cell colony by comparing the QPM score of each colony with its threshold has excellent evaluation accuracy.

(Example 2)

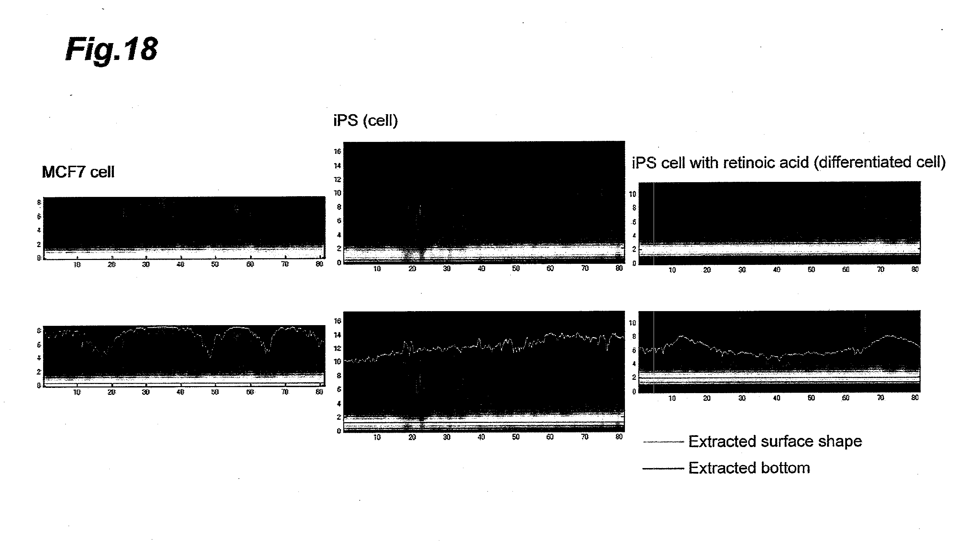

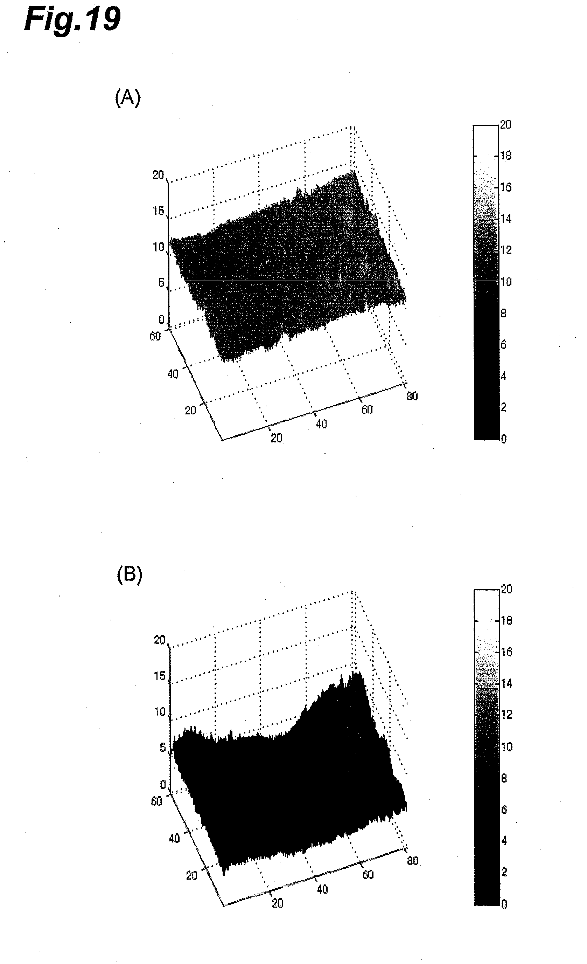

On a 35 mm-diameter glass bottom dish with antireflection coating, a human living fibroblast-derived 253G1 iPS cell strain was seeded at 10-20 colonies/dish, and cultured on a feeder using a medium containing a final concentration of 4 ng/mL of human basic fibroblast growth factor (Primate ES Medium, ReproCELL Incorporated, Trade name: RCHEMD001). The size of one colony was approximately 200 $\mu$m. For the feeder cell, a mouse lung fibroblast cell was used. The cell was cultured until the 3rd day after the seeding. The medium was exchanged once a day.
The sample for differentiation of the iPS cell was transferred to a medium containing a final concentration of 4 ng/mL of human basic fibroblast growth factor and 12.5 $\mu$M of retinoic acid (Primate ES Medium) on the 2nd day after the seeding, and further cultured for 4 days. Generally, retinoic acid is used as a reagent for inducing differentiation. In addition, as a control for the differentiated cell, a human breast cancer-derived epithelial cell MCF7 cell was used. The MCF7 cell was seeded at 20% of cell density, and cultured with a DMEM medium containing 10% of FBS up to a near confluent state for 3 days. On each culture line except for the MCF7 cell, the medium was exchanged once a day.
For the cells in a 60 $\mu$m x 80 $\mu$m visual field, three-dimensional data was obtained at intervals of 0.125 $\mu$m in horizontal direction and 0.32 $\mu$m in vertical direction using a reflecting quantitative phase microscope, and a tomographic image was produced from the obtained data. From the produced tomographic image, bottom and surface shapes were extracted and quantified as shown in Fig. 18 and Fig. 19. This processing was carried out in the entire visual field to obtain the bottom and surface shapes of the entire visual field. From the obtained bottom and surface shapes, a cell thickness (physical length) was measured to calculate a mean value. The mean values of the calculated physical cell lengths in respective samples are shown in Table 2.

[Table 2]

| | Mean value of the physical cell length ($\mu$m) |
|---|---|
| iPS cell | 12.3 |
| iPS cell with retinoic acid (differentiated cell) | 6.25 |
| MCF7 cell (differentiated cell) | 5.80 |

As shown in Table 2, the mean value of the physical length of the iPS cell was larger than those of the iPS cell cultured with retinoic acid and the MCF7 cell which are differentiated cells.

This result reveals that it can be evaluated whether a cell is a stem cell based on its physical length.

(Example 3)

Furthermore, in order to verify that the size of the physical length and the size of the mean optical length correlate with each other and evaluation for the stem cell is possible by using either of these indicators, both the physical length and mean optical length were measured for the same cell in the same colony.

On a 35 mm-diameter glass bottom dish with matrigel coating, a human living fibroblast-derived 253G1 iPS cell strain was seeded at 10-20 colonies/dish, and cultured in a feederless condition using a medium (mTeSR1, STEMCELL Technologies). The size of one colony was approximately 200 $\mu$m. The cell was cultured until the 4th day after the seeding. The medium was exchanged once a day.

The sample for differentiation of the iPS cell was transferred to a medium containing a final concentration of 12.5 $\mu$M of retinoic acid (mTeSR1) on the 2nd day after the seeding, and further cultured until the 4th day after the seeding. Generally, retinoic acid is used as a reagent for inducing differentiation. The medium was exchanged once a day.

For the cells in a 60 $\mu$m x 80 $\mu$m visual field, three-dimensional data was obtained at intervals of 0.125 $\mu$m in horizontal direction and 0.32 $\mu$m in vertical direction using a reflecting quantitative phase microscope, and a tomographic image was produced from the obtained data. From the produced tomographic image, bottom and surface shapes were extracted and quantified. This processing was carried out in the entire visual field to obtain the bottom and surface shapes of the entire visual field. From the obtained bottom and surface shapes, a physical length (cell thickness) was measured.

Similarly, an optical length of the cell was also measured by the reflecting quantitative phase microscope. The reflecting quantitative phase microscope can also measure the optical thickness (optical length) of the cell by imaging the phase of reflected light from a cell-adhesive substrate (Optics Express, Vol. 16, Issue 16, pp. 12227-12238, 2008). In this example, the optical length and physical length of the cell were measured in the same cell.

In calculation of a physical length and a mean optical length of each cell, an ROI of each cell was set so as to include both the cytoplasm and cell nucleus, and their mean values in the ROI were designated as the physical length and the mean optical length of each cell.

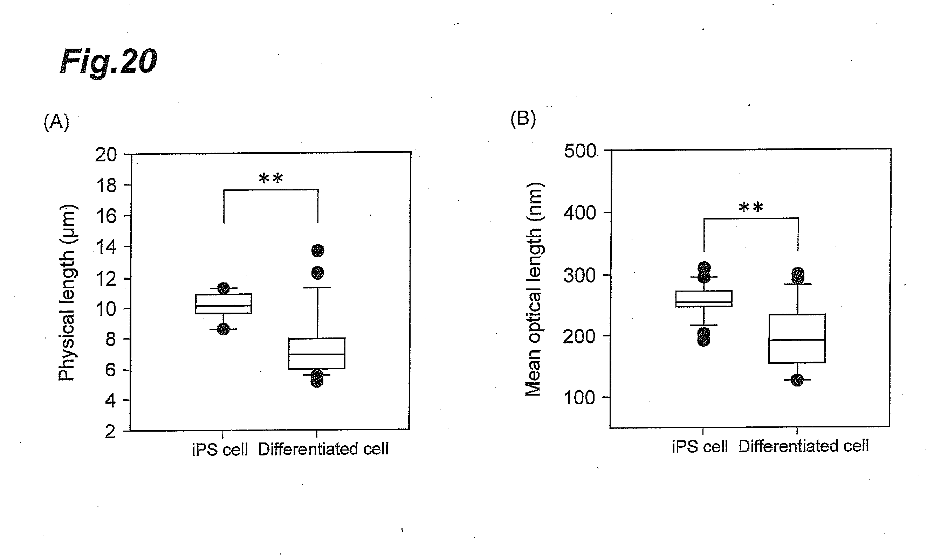

For the iPS cell colony, a total of 25 cells were sampled from 4 colonies, and for the cell colony with retinoic acid (differentiated cell colony), a total of 27 cells were sampled from 4 colonies. Graphs of the results are shown in Fig. 20. Fig. 20(A) shows the difference of the physical length between the iPS cell colony and the differentiated cell colony, and Fig. 20(B) shows the difference of the mean optical length between them. It was revealed that the size of the physical length and the size of the mean optical length correlated with each other and evaluation for the stem cell was possible based on either of these indicators. ** in Fig. 20(A) and Fig. 20(B) represents that the p value by Student's t-test is less than 0.001, suggesting that these two populations can be discriminated from each other by a high significance.

[Explanation of Symbols]

D    Cell evaluation apparatus

D1    Determination means

D2    Evaluation means

D3    Indication means

**Claims**

1.  A cell evaluation method, comprising:

    evaluating a cell differentiation degree based on a cell thickness.

2.  The cell evaluation method according to claim 1, wherein the cell thickness is a mean optical length represented by Formula (1):

$$\text{Mean optical length} = (C + N)/2 \cdots (1)$$

(wherein, N is an optical length on the inside of a cell nucleus region, and C is an optical length on the outside of the cell nucleus region).

3.  The cell evaluation method according to claim 1 or 2, wherein the cell differentiation degree is evaluated based on a mean optical length represented by Formula (1) and a CN ratio represented by Formula (2):

$$\text{Mean optical length} = (C + N)/2 \cdots (1)$$

$$\text{CN ratio} = C/N \cdots (2)$$

(wherein, N is an optical length on the inside of a cell nucleus region, and C is an optical length on the outside of the cell nucleus region).

4.  The cell evaluation method according to any one of claims 1 to 3, wherein the cell differentiation degree is evaluatedbased on an optical length parameter represented by Formula (3):

$$\text{Optical length parameter} = (\text{mean optical length} - c1)^{\alpha} \cdot (\text{CN ratio} - c2)^{\beta} \cdots (3)$$

(wherein, c1 and c2 are any constants, $\alpha > 0$, $\beta \geq 0$, mean optical length = (C + N)/2, CN ratio = C/N, and N is an optical length on the inside of a cell nucleus region, and C is an optical length on the outside of the cell nucleus region).

5.  The cell evaluation method according to claim 1, wherein the cell thickness is a physical length of the cell.

6.  The cell evaluation method according to any one of claims 1 to 5, wherein the cell is a single cell.

7.  The cell evaluation method according to any one of claims 1 to 5, wherein the cell is a cell population.

8.  The cell evaluation method according to any one of claims 1 to 7, further comprising:

    observing the cell with a microscope to obtain cell observation data, and
    determining the cell thickness based on the cell observation data.

9.  The cell evaluation method according to claim 8, wherein the microscope is a phase microscope.

**10.** The cell evaluation method according to claim 8, wherein the microscope is a reflecting quantitative phase microscope, a low-coherence interference microscope, a phase tomography microscope, an optical coherence tomography microscope, a confocal microscope or a differential interference microscope.

**11.** The cell evaluation method according to any one of claims 8 to 10, wherein the cell observation data is an image obtained by combining two or more cell observation images.

# Fig.1

# Fig.2

D11 — CPU

D16 — Communication module

D12 — ROM

D13 — RAM

D14 — Input device

D15 — Output device

D17 — Auxiliary memory

D

*Fig.3*

D

**Cell evaluation apparatus**

D1

| Determination means |
| --- |

D2

| Evaluation means |
| --- |

D3

| Display means |
| --- |

Fig.4

Fig.5

# Fig.6

*Fig.7*

*Fig.8*

Fig.9

Fig.10

**Fig.11**

(A)

Cytoplasm  Cell nucleus  Nucleolus

(B)

(C)

## *Fig.12*

(A)

(B)

# Fig.13

(A)

(B)

Fig.14

EP 2 905 601 A1

# Fig.15

*Fig.16*

# Fig.17

(A)

Fluorescent brightness in the anti-nanog immunostaining

(B)

Fluorescent brightness in the anti-nanog immunostaining

(C)

Fluorescent brightness in the anti-nanog immunostaining

*Fig.18*

## Fig.19

(A)

(B)

## Fig.20

(A)

(B)

EP 2 905 601 A1

Europäisches
Patentamt

European
Patent Office

Office européen
des brevets

# EUROPEAN SEARCH REPORT

Application Number

EP 15 15 3829

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | Norikazu Sugiyama ET AL: "Label-free characterization of living human induced pluripotent stem cells by subcellular topographic imaging technique using full-field quantitative phase microscopy coupled with interference reflection microscopy References and links", Opt. Lett. Opt. Lett. Opt. Lett. Proc. Natl. Acad. Sci. U.S.A. Proc. Natl. Acad. Sci. U.S.A. Opt. Express Opt. Express Opt. Lett. J. Cell Sci. Biol. Eur. J. Cell Biol. Biophys. J. J. Cell Sci. J. Cell Biol. J. Cell Sci. Methods Enzymol. J. Bone Miner, 1 January 2012 (2012-01-01), pages 2175-2183, XP055095718, Retrieved from the Internet: URL:http://www.opticsinfobase.org/DirectPD FAccess/D48ABE6E-083F-25E6-602AE0CF2CED2EE 9_240869/boe-3-9-2175.pdf?da=1&id=240869&s eq=0&mobile=no [retrieved on 2014-01-10] * abstract * * page 2177, lines 17-23 * * page 2180, lines 1-4, paragraph 2.3 * * page 2178, lines 1-18, paragraph 2.2 * | 1-4,6, 8-11 | INV. G01N15/14 G06K9/00 G06T7/00 |
| X,D | JP 2012 231709 A (HAMAMATSU PHOTONICS KK) 29 November 2012 (2012-11-29) * paragraph [0002] * * paragraph [0055] * * paragraph [0040] * * paragraph [0042] * * paragraph [0054] * | 1-10 | TECHNICAL FIELDS SEARCHED (IPC) G01N G06K G06T |
| A | US 2011/188728 A1 (SAMMAK PAUL J [US] ET AL) 4 August 2011 (2011-08-04) * paragraph [0117] * * paragraph [0215] * | 1-11 | |

The present search report has been drawn up for all claims

| Place of search | Date of completion of the search | Examiner |
|---|---|---|
| The Hague | 16 June 2015 | Traversa, Marzia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 15 15 3829

This annex lists the patent family members relating to the patent documents cited in the above-mentioned European search report.
The members are as contained in the European Patent Office EDP file on
The European Patent Office is in no way liable for these particulars which are merely given for the purpose of information.

16-06-2015

| Patent document cited in search report | | Publication date | Patent family member(s) | | Publication date |
|---|---|---|---|---|---|
| JP 2012231709 | A | 29-11-2012 | EP | 2703494 A1 | 05-03-2014 |
| | | | JP | 2012231709 A | 29-11-2012 |
| | | | US | 2014064594 A1 | 06-03-2014 |
| | | | WO | 2012147403 A1 | 01-11-2012 |
| US 2011188728 | A1 | 04-08-2011 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012231709 A

**Non-patent literature cited in the description**

- *Biomedical Optics Express,* 2012, vol. 3 (9), 2175-2183
- **TOBIAS BRAMBRINK et al.** Sequential Expression of Pluripotency Markers during Direct Reprogramming of Mouse Somatic Cells. *Cell Stem Cell,* February 2008, vol. 2, 151-159
- *Optics Express,* 2008, vol. 16 (16), 12227-12238